(19) Europäisches Patentamt
European Patent Office
Office européen des brevets

(11) **EP 4 332 145 A1**

(12) **EUROPEAN PATENT APPLICATION**
published in accordance with Art. 153(4) EPC

(43) Date of publication:
**06.03.2024 Bulletin 2024/10**

(21) Application number: **21939352.7**

(22) Date of filing: **30.04.2021**

(51) International Patent Classification (IPC):
***C08G 61/02*** *(2006.01)* ***H01M 4/86*** *(2006.01)*
***H01M 8/02*** *(2016.01)*

(52) Cooperative Patent Classification (CPC):
**C08G 61/02; H01M 4/86; H01M 8/02;** Y02E 60/50

(86) International application number:
**PCT/JP2021/017255**

(87) International publication number:
**WO 2022/230196 (03.11.2022 Gazette 2022/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
- **University of Yamanashi**
  **Kofu-shi, Yamanashi 400-8510 (JP)**
- **WASEDA UNIVERSITY**
  **Shinjuku-ku**
  **Tokyo 169-8050 (JP)**
- **Takahata Precision Co., Ltd.**
  **Tokyo 160-0023 (JP)**

(72) Inventors:
- **MIYATAKE Kenji**
  **Kofu-shi, Yamanashi 400-8510 (JP)**
- **OZAWA Yoshihiro**
  **Kofu-shi, Yamanashi 400-8510 (JP)**
- **YOKOTA Naoki**
  **Tokyo 160-0023 (JP)**
- **TAKAHASHI Yuko**
  **Tokyo 160-0023 (JP)**
- **NAGASE Katsuya**
  **Tokyo 160-0023 (JP)**

(74) Representative: **Plougmann Vingtoft a/s**
**Strandvejen 70**
**2900 Hellerup (DK)**

# (54) ANION EXCHANGE RESIN AND ELECTROLYTE MEMBRANE

(57) The present invention provides an anion exchange resin which is capable of producing an electrolyte membrane with excellent chemical property, electrical property, and mechanical property, and an electrolyte membrane formed from the anion exchange resin. In an anion exchange resin of the present invention, a hydrophobic unit, obtained by repeating divalent hydrophobic groups which comprises a bisphenol residue represented by formula (1); a hydrophobic unit, obtained by repeating divalent hydrophobic groups which comprises a bisphenol residue represented by formula (2); and a hydrophilic unit, obtained by repeating divalent hydrophobic groups, which is composed of a plurality of aromatic rings connected to each other via a divalent hydrocarbon group and/or via carbon-carbon bond, and which is connected to an anion exchange group via a divalent saturated hydrocarbon group with a carbon number of 2 or more, are connected to each other via carbon-carbon bond.

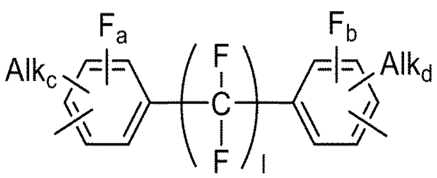
(1)

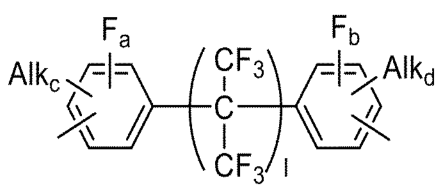
(2)

EP 4 332 145 A1

FIG. 1

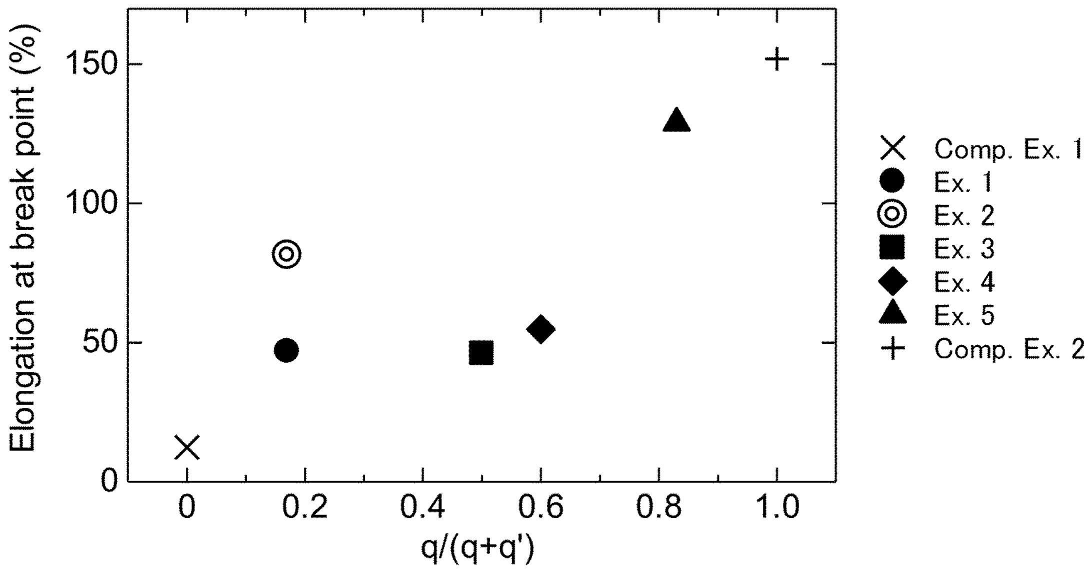
Elongation at break point (%)
150
100
50
0
0
0.2
0.4
0.6
0.8
1.0
q/(q+q')
Comp. Ex. 1
Ex. 1
Ex. 2
Ex. 3
Ex. 4
Ex. 5
Comp. Ex. 2

Fig. 1

**Description**

TECHNICAL FIELD

The present invention relates to an anion exchange resin and an electrolyte membrane.

BACKGROUND ART

The anion exchange resin is described, in which the anion exchange resin comprises: a divalent hydrophobic group as shown in the following formula; and a divalent hydrophilic group being composed of one aromatic ring, or being composed of a plurality of aromatic rings which are connected to each other via a linking group and/or carbon-carbon bond, wherein the linking group is a divalent hydrocarbon group, a divalent silicon-containing group, a divalent nitrogen-containing group, a divalent phosphorus-containing group, a divalent oxygen-containing group, or a divalent sulfur-containing group, and at least one of the linking group or the aromatic ring is connected to an anion exchange group-containing group; wherein the anion exchange resin comprises a hydrophobic unit being composed of the single hydrophobic group, or being composed of a plurality of the hydrophobic groups repeated via ether bond, thioether bond, or carbon-carbon bond; wherein the anion exchange resin comprises a hydrophilic unit being composed of the single hydrophilic group, or being composed of a plurality of the hydrophilic groups repeated via ether bond, thioether bond, or carbon-carbon bond; and wherein the hydrophobic unit and the hydrophilic unit are connected via ether bond, thioether bond, or carbon-carbon bond.

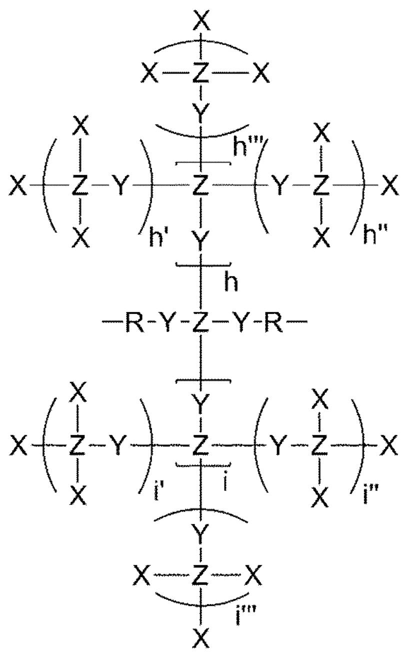

In the formula, X are the same or different from each other and each represents a halogen atom, a pseudohalide, or hydrogen atom; Y are the same or different from each other and each represents an oxygen-containing group, a sulfur-containing group, or direct bond; Z are the same or different from each other and each represents carbon atom or silicon atom; R are the same or different from each other and each represents an aromatic group or direct bond; h, h', h", i, i', and i" are the same or different from each other and each represents an integer of 0 or more; and h‴ and i‴ represent an integer of 1 or more.

PRIOR ART DOCUMENTS

PATENT DOCUMENT

Patent Document 1: JP 2020-117568 A

SUMMARY OF THE INVENTION

PROBLEM TO BE SOLVED BY THE INVENTION

However, although the anion exchange resin described in Patent Document 1 successfully improves electrical property (anion conductivity) while maintaining high chemical property (durability, especially alkali resistance), further improved chemical properties and electrical properties are desired, and there is a problem that mechanical property (thin film flexibility) is not sufficient.

Accordingly, an object of the present invention is to provide an anion exchange resin which is capable of producing an electrolyte membrane with excellent chemical property, electrical property, and mechanical property, and an electrolyte membrane formed from the anion exchange resin.

MEANS OF SOLVING THE PROBLEM

In order to solve the above problem, an anion exchange resin of the present invention comprises:

a divalent hydrophobic group (a) comprising a bisphenol residue represented by the following formula (1);
a divalent hydrophobic group (b) comprising a bisphenol residue represented by the following formula (2); and
a divalent hydrophilic group, being composed of a single aromatic ring or being composed of a plurality of aromatic rings which are connected to each other via a linking group and/or via carbon-carbon bond; wherein the linking group is a divalent hydrocarbon group, a divalent silicon-containing group, a divalent nitrogen-containing group, a divalent phosphorus-containing group, a divalent oxygen-containing group, or a divalent sulfur-containing group; and at least one of the linking group or the aromatic ring is connected to an anion exchange group via a divalent saturated hydrocarbon group with a carbon number of 2 or more;
wherein the anion exchange resin comprises a hydrophobic unit (a), being composed of the single hydrophobic group (a), or being composed of a plurality of the hydrophobic groups (a) repeated via ether bond, thioether bond, or carbon-carbon bond;
wherein the anion exchange resin comprises a hydrophobic unit (b), being composed of the single hydrophobic group (b), or being composed of a plurality of the hydrophobic groups (b) repeated via ether bond, thioether bond, or carbon-carbon bond;
wherein the anion exchange resin comprises a hydrophilic unit, being composed of the single hydrophilic group, or being composed of a plurality of the hydrophilic groups repeated via ether bond, thioether bond, or carbon-carbon bond; and
wherein the hydrophobic unit (a), the hydrophobic unit (b), and the hydrophilic unit are connected via ether bond, thioether bond, or carbon-carbon bond.

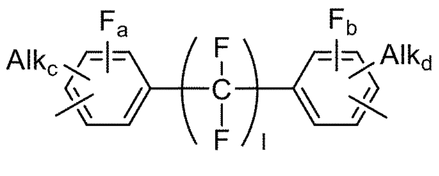

(1)

In the formula, Alk are the same or different from each other and each represents an alkyl group or an aryl group; a, b, c, and d are the same or different from each other and each represents an integer of 0 to 4; and l represents an integer of 1 or more [0009]

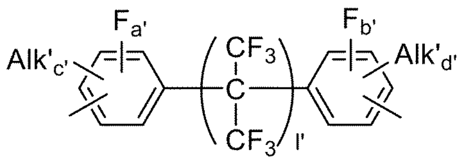

(2)

In the formula, Alk' are the same or different from each other and each represents an alkyl group or an aryl group; a', b ', c', and d' are the same or different from each other and each represents an integer of 0 to 4; and l' represents an integer of 1 or more.

In the anion exchange resin of the present invention, it is suitable that the hydrophobic group (a) comprises a bisphenol residue represented by the following formula (1').

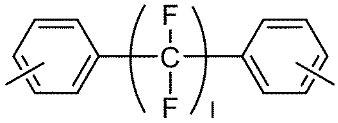

(1')

In the formula, l represents an integer of 1 or more.

In the anion exchange resin of the present invention, it is suitable that the hydrophobic group (b) comprises a bisphenol residue represented by the following formula (2').

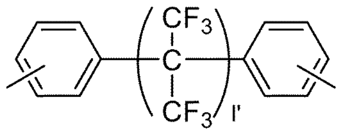

(2')

In the formula, l' represents an integer of 1 or more.

In the anion exchange resin of the present invention, it is suitable that the hydrophilic group is a divalent hydrophilic group, being composed of a single polycyclic compound or being composed of a plurality of polycyclic compounds which are connected to each other via a linking group and/or via carbon-carbon bond; wherein the linking group is a divalent hydrocarbon group, a divalent silicon-containing group, a divalent nitrogen-containing group, a divalent phosphorus-containing group, a divalent oxygen-containing group, or a divalent sulfur-containing group; and at least one of the linking group or the polycyclic compound is connected to an anion exchange group via a divalent saturated hydrocarbon group with a carbon number of 2 or more.

In the anion exchange resin of the present invention, it is more suitable that the divalent hydrophilic group is a fluorene residue represented by the following formula (3).

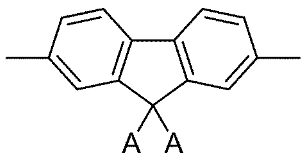

(3)

In the formula, A are the same or different from each other and each represents an anion exchange group-containing group, or A represent a cyclic structure containing an anion exchange group.

In order to solve the above problem, an electrolyte membrane of the present invention comprises the anion exchange resin described above.

EFFECT OF THE INVENTION

The present invention can provide an anion exchange resin which is capable of producing an electrolyte membrane with excellent chemical property, electrical property, and mechanical property, and an electrolyte membrane formed from the anion exchange resin.

BRIEF DESCRIPTION OF DRAWINGS

FIG. 1 shows a graph showing the results of tensile test of the samples obtained in the Examples and the Comparative Examples.

FIG. 2 shows a graph showing the results of hydroxide ion conductivity measurement of the samples obtained in the Examples and the Comparative Examples.

FIG. 3 shows a graph showing the results of moisture content measurement of the samples obtained in the Examples and the Comparative Examples.

FIG. 4 shows a graph showing the results of durability test of the samples obtained in the Examples and the Comparative Examples.

MODE FOR CARRYING OUT THE INVENTION

An anion exchange resin of the present invention has a divalent hydrophobic group (a), a divalent hydrophilic group (b), and a divalent hydrophilic group.

In an anion exchange resin of the present invention, the divalent hydrophobic group (a) has a bisphenol residue represented by the following formula (1).

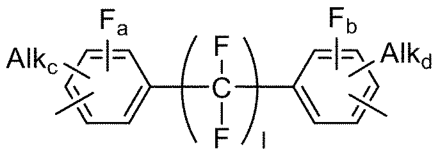

(1)

In the formula, Alk are the same or different from each other and each represents an alkyl group or an aryl group; a, b, c, and d are the same or different from each other and each represents an integer of 0 to 4; and l represents an integer of 1 or more.

In the above formula (1), Alk are the same or different from each other and each represents an alkyl group or an aryl group. Examples of the alkyl group include, for example, alkyl groups with a carbon number of 1 to 20 such as methyl group, ethyl group, propyl group, i-propyl group, butyl group, i-butyl group, sec-butyl group, t-butyl group, pentyl group, hexyl group, heptyl group, and octyl group; cycloalkyl groups with a carbon number of 1 to 20 carbons such as cyclopropyl group, cyclobutyl group, cyclopentyl group, cyclohexyl group, cycloheptyl group, and cyclooctyl group. Examples of the aryl group include, for example, phenyl group, biphenyl group, naphthyl group, and fluorenyl group.

In the above formula (1), a and b are the same or different from each other and each represents an integer of 0 to 4, and preferably represents an integer of 0 to 2. Further preferably both a and b represent 0.

In the above formula (1), c and d are the same or different from each other and each represents an integer of 0 to 4, and preferably represents an integer of 0 to 2. Further preferably both c and d represent 0.

In the above formula (1), l represents an integer of 1 or more, preferably represents an integer of 1 to 20, and more preferably represents an integer of 2 to 6.

As the hydrophobic group (a), preferred examples include bisphenol residues represented by the following formula (1').

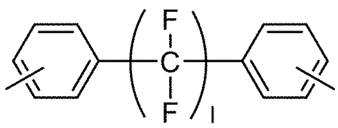

(1')

In the formula, l has the same meaning as l in the formula (1) described above.

In an anion exchange resin of the present invention, the divalent hydrophobic group (b) has a bisphenol residue represented by the following formula (2).

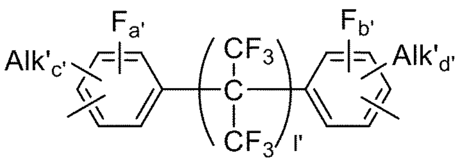

(2)

In the formula, Alk' are the same or different from each other and each represents an alkyl group or an aryl group; a', b ', c', and d' are the same or different from each other and each represents an integer of 0 to 4; and l' represents an integer of 1 or more.

In the above formula (2), Alk' are the same or different from each other and each represents an alkyl group or an aryl group. Examples of the alkyl group include the alkyl groups shown in the formula (1) described above, and examples of the aryl group include the aryl group shown in the formula (1) described above.

In the above formula (2), a' and b' are the same or different from each other and each represents an integer of 0 to 4, and preferably represents an integer of 0 to 2. Further preferably both a' and b' represent 0.

In the above formula (2), c' and d' are the same or different from each other and each represents an integer of 0 to 4, and preferably represents an integer of 0 to 2. Further preferably both c' and d' represent 0.

In the above formula (2), l' represents an integer of 1 or more, preferably represents an integer of 1 to 20, and

more preferably represents an integer of 2 to 6.

As the hydrophobic group (b), preferred examples include bisphenol residues represented by the following formula (2').

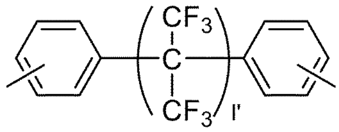

(2')

In the formula, l' has the same meaning as l' in the formula (2) described above.

Thus, by introducing a specific divalent fluorine-containing group into the main chain of the hydrophobic group which constitutes a hydrophobic unit, the following effects can be obtained.

- The solubility and the flexibility are increased by the main chain having low intermolecular interaction.
- The water repellency is provided, and ion conductive paths can be formed by the growing phase separation to a hydrophilic moiety (near the ion exchange group).
- The water repellency prevents a hydrophilic hydroxide ion and an oxidant from accessing the main chain (providing improved alkali resistance and improved chemical stability).
- The rigidity of the main chain can be controlled (providing improved flexibility of the electrolyte membrane).
- It can adhere the catalyst layer due to its low glass transition temperature (providing decreased contact resistance).
- The gas diffusion capability of the resin can be controlled (providing increased oxygen diffusion capability when used as a binder).

In an anion exchange resin of the present invention, the divalent hydrophilic group is composed of a single aromatic ring or is composed of a plurality of (two or more, preferably two) aromatic rings which are connected to each other via a linking group and/or via carbon-carbon bond; in which the linking group is a divalent hydrocarbon group, a divalent silicon-containing group, a divalent nitrogen-containing group, a divalent phosphorus-containing group, a divalent oxygen-containing group, or a divalent sulfur-containing group; and in which at least one of the linking group or the aromatic ring is connected to an anion exchange group-containing group.

Examples of the aromatic ring include, for example, monocyclic or polycyclic compounds with a carbon number of 6 to 14 such as benzene ring, naphthalene ring, indene ring, azulene ring, fluorene ring, anthracene ring, and phenanthrene ring, and heterocyclic compounds such as azole, oxole, thiophene, oxazole, thiazole, and pyridine.

Preferred examples of the aromatic ring include monocyclic aromatic hydrocarbons with a carbon number of 6 to 14, and more preferred examples include benzene ring.

The aromatic ring may be substituted with a substituent such as a halogen atom, an alkyl group, an aryl group, and a pseudohalide, as required. Examples of the halogen atom include fluorine atom, chlorine atom, bromine atom, and iodine atom. Examples of the pseudohalide include trifluoromethyl group, -CN, - NC, - OCN, -NCO, -ONC, -SCN, -NCS, -SeCN, -NCSe, -TeCN, -NCTe, and $-N_3$. Examples of the alkyl group include, for example, alkyl groups with a carbon number of 1 to 20 such as methyl group, ethyl group, propyl group, i-propyl group, butyl group, i-butyl group, sec-butyl group, t-butyl group, pentyl group, hexyl group, heptyl group, and octyl group; cycloalkyl groups with a carbon number of 1 to 20 such as cyclopropyl group, cyclobutyl group, cyclopentyl group, cyclohexyl group, cycloheptyl group, and cyclooctyl group. Examples of the aryl group include, for example, phenyl group, biphenyl group, naphthyl group, and fluorenyl group.

In the case where the aromatic ring is substituted with a substituent such as a halogen atom, an alkyl group, an aryl group, or a pseudohalide, the substitute number and the substitute position of the substituent such as a halogen atom, an alkyl group, an aryl group, or a pseudohalide are appropriately set according to the purpose and the application.

More specifically, examples of the aromatic ring substituted with a halogen atom include, for example, benzene rings substituted with 1 to 4 halogen atoms (for example, benzene rings substituted with 1 to 4 fluorine atoms, benzene rings substituted with 1 to 4 chlorine atoms, benzene rings substituted with 1 to 4 bromine atoms, benzene rings substituted with 1 to 4 iodine atoms, and the like; in which 1 to 4 halogen atoms may be all the same or different from each other).

Examples of the divalent hydrocarbon group include, for example, divalent saturated hydrocarbon groups with a carbon number of 1 to 20 such as methylene ($-CH_2-$), ethylene, propylene, i-propylene ($-C(CH_3)_2-$), butylene, i-butylene, sec-butylene, pentylene (pentene), i-pentylene, sec-pentylene, hexylene (hexamethylene), 3-methylpentene, heptylene, octylene, 2-ethylhexylene, nonylene, decylene, i-decylene, dodecylene, tetradecylene, hexadecylene, and octadecylene.

Preferred examples of the divalent hydrocarbon group include saturated hydrocarbon groups with a carbon number of 1 to 3 such as methylene ($-CH_2-$), ethylene, propylene, and i-propylene ($-C(CH_3)_2-$), more preferred examples include methylene ($-CH_2-$) and isopropylene ($-C(CH_3)_2-$), and especially preferred examples include i-propylene

$(-C(CH_3)_2-)$.

The divalent hydrocarbon group may be substituted with a monovalent residue in the aromatic rings described above.

In an anion exchange resin of the present invention, the divalent hydrophilic group is preferably composed of a single polycyclic compound or is composed of a plurality of (two or more, preferably two) polycyclic compounds which are connected to each other via a linking group and/or via carbon-carbon bond; in which the linking group is a divalent hydrocarbon group, a divalent silicon-containing group, a divalent nitrogen-containing group, a divalent phosphorus-containing group, a divalent oxygen-containing group, or a divalent sulfur-containing group; and in which at least one of the linking group or the polycyclic compound is connected to an anion exchange group via a divalent saturated hydrocarbon group with a carbon number of 2 or more.

Examples of the polycyclic compound include, for example, naphthalene ring, indene ring, azulene ring, fluorene ring, anthracene ring, phenanthrene ring, carbazole ring, and indole ring, and preferred examples include fluorene ring.

Examples of the divalent hydrocarbon group include divalent hydrocarbon groups described above.

The anion exchange group-containing group may be a single anion exchange group or may be an anion exchange group which is connected via a divalent saturated hydrocarbon group.

The anion exchange group need only be connected to at least one of the linking group or the aromatic ring. The anion exchange group may be connected to a plurality of linking groups or aromatic rings, and may be connected to all linking groups or aromatic rings. A plurality of anion exchange groups may be connected to one linking group or aromatic ring.

The anion exchange group is introduced into the side chain in the hydrophilic group. Specifically, the anion exchange group is not particularly limited, and any known anion exchange groups such as quaternary ammonium groups, tertiary amino groups, secondary amino groups, primary amino groups, phosphine, phosphazene, tertiary sulfonium groups, quaternary boronium groups, quaternary phosphonium groups, and guanidinium group can be selected as the anion exchange group. From the viewpoint of the anion conductivity, preferred examples of the anion exchange group include quaternary ammonium groups.

Preferred examples of the anion exchange group include $-N^+(CH_3)_3$. Other examples of the anion exchange group include groups having the following structures. In the following structural formulae, * represents a moiety bonded to the aromatic ring having a substituent group.

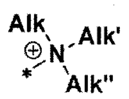
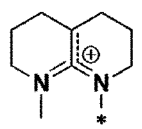
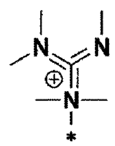

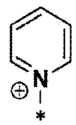
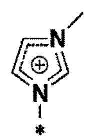
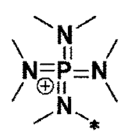
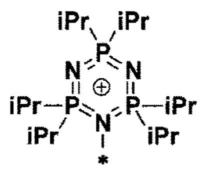

In the figure, Alk, Alk', and Alk" represent an alkyl group described above, and iPr represents i-propyl group.

The carbon number of the divalent saturated hydrocarbon group for connecting the anion exchange group to the linking group or the aromatic ring of the divalent hydrophilic residue is preferably 2 or more. The carbon number of the divalent saturated hydrocarbon group is more preferably an integer of 2 to 20, is further preferably an integer of 3 to 10, and is particularly preferably an integer of 4 to 8.

Preferred examples of the divalent saturated hydrocarbon group include linear saturated hydrocarbon groups such as methylene $(-(CH_2)-)$, ethylene $(-(CH_2)_2-)$, trimethylene $(-(CH_2)_3-)$, tetramethylene $(-(CH_2)_4-)$, pentamethylene $(-(CH_2)_5-)$, hexamethylene $(-(CH_2)_6-)$, heptamethylene $(-(CH_2)_7-)$, and octamethylene $(-(CH_2)_8-)$.

Preferred examples of the divalent hydrophilic group having the structure include groups having a structure represented by the following formulae.

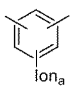
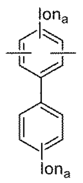
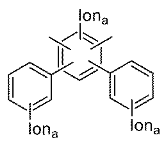
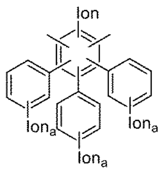
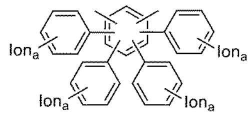
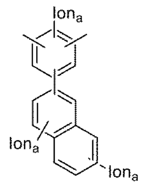

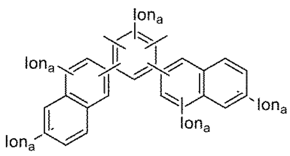
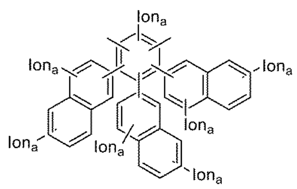
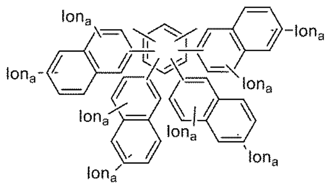
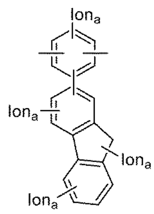

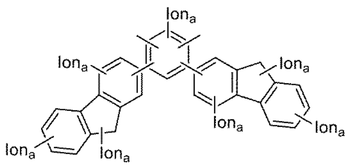
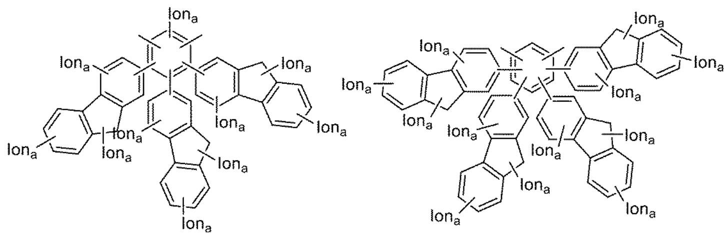

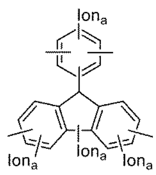
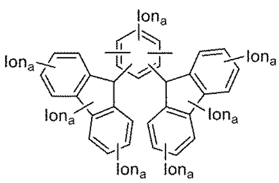
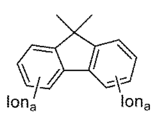
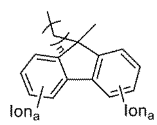
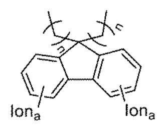

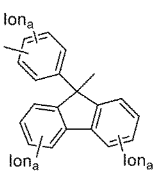
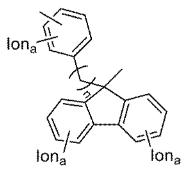
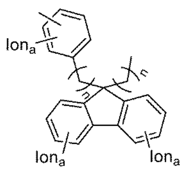
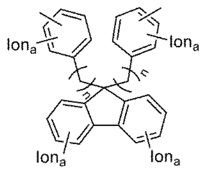
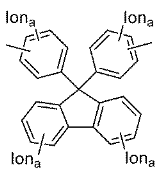

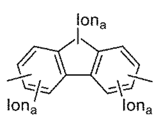
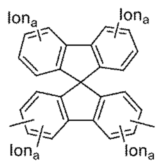
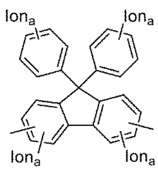
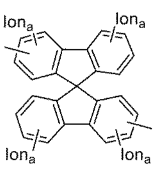
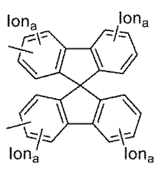

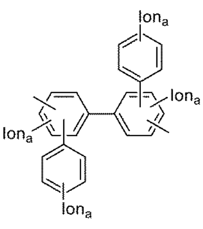
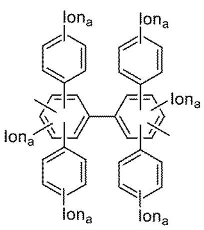
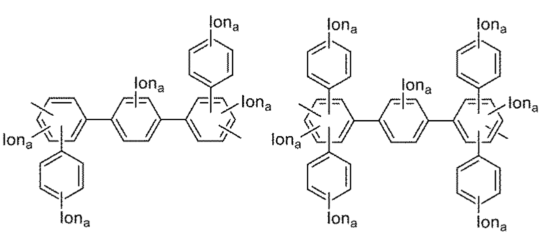

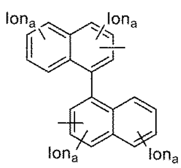
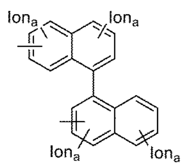
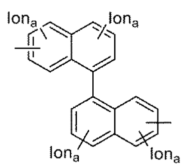
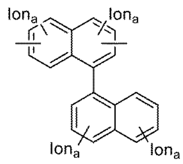

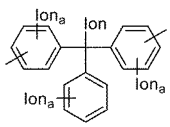
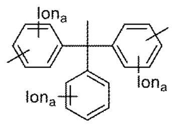
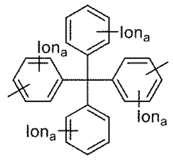
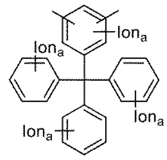

In the formulae, Ion are the same or different from each other and each represents an anion exchange group-containing group; a represent an integer of 0 or more (preferably 0 or 1) to which the anion exchange group-containing group can be bonded; and n represents an integer of 0 or more.

Preferred examples of the divalent hydrophilic group having the structure also include fluorene residues represented by the following formula (3).

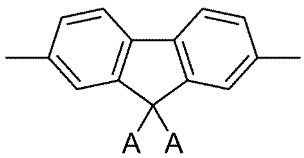
(3)

In the formula, A are the same or different from each other and each represents an anion exchange group-containing group, or A represent a cyclic structure containing an anion exchange group.

Particularly preferred examples of the divalent hydrophilic group having the structure include groups represented by the following formula (3a), the following formula (3b), the following formula (3c), or the following formula (3d).

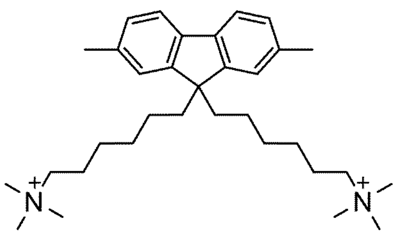
(3a)

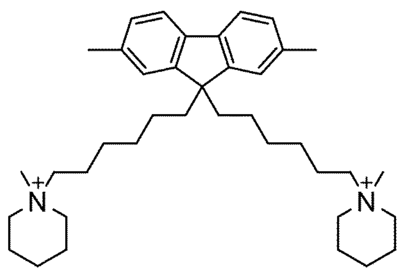
(3b)

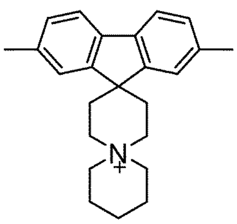
(3c)

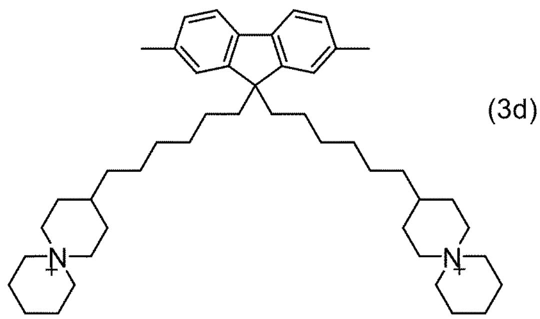
(3d)

An anion exchange resin of the present invention has: a hydrophobic unit (a), being composed of the single hydrophobic group (a) described above, or being composed of a plurality of the hydrophobic groups (a) described above which are repeated via ether bond, thioether bond, or carbon-carbon bond; a hydrophobic unit (b), being composed of the single hydrophobic group (b) described above, or being composed of a plurality of the hydrophobic groups (b) described above which are repeated via ether bond, thioether bond, or carbon-carbon bond; and a hydrophilic unit, being

composed of the single hydrophilic group described above, or being composed of a plurality of the hydrophilic groups described above which are repeated via ether bond, thioether bond, or carbon-carbon bond. The hydrophobic unit (a) is preferably composed of the single hydrophobic group (a) or is preferably composed of the hydrophobic groups (a) which are repeated via carbon-carbon bond. The hydrophobic unit (b) is preferably composed of the single hydrophobic group (b) or is preferably composed of the hydrophobic groups (b) which are repeated via carbon-carbon bond. The hydrophilic unit is preferably composed of the single hydrophilic group or is preferably composed of the hydrophilic groups which are repeated via carbon-carbon bond.

The unit corresponds to a block of a block copolymer as generally used.

Preferred examples of the hydrophobic unit (a) include units formed by connecting the divalent hydrophobic groups (a) represented by the formula (1) described above to each other via carbon-carbon bond. The unit may also be a unit formed by connecting multiple species of the divalent hydrophobic groups (a) represented by the formula (1) described above to each other in random form, in ordered form including alternating, or in block form.

For example, the hydrophobic unit (a) is represented by the following formula (4).

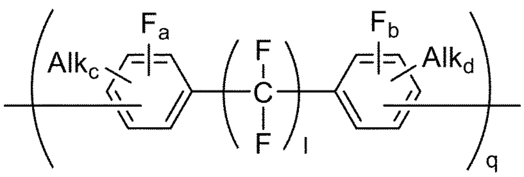

(4)

In the formula, Alk, a, b, c, d, and l respectively have the same meaning as Alk, a, b, c, d, and l in the formula (1) described above; and q represents 1 to 200.

In the above formula (4), q represents, for example, 1 to 200; and preferably represents 1 to 50.

Further preferred examples of the hydrophobic unit (a) include units formed by connecting the divalent hydrophobic groups represented by the formula (1') described above to each other via carbon-carbon bond.

The hydrophobic unit (a) is particularly preferably represented by the following formula (4').

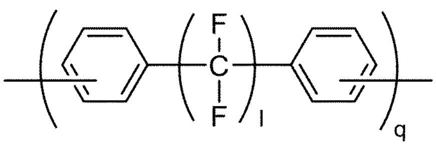

(4')

In the formula, l has the same meaning as l in the formula (1') described above; and q represents 1 to 200.

In the above formula (4'), q represents, for example, 1 to 200; and preferably represents 1 to 50.

Preferred examples of the hydrophobic unit (b) include units formed by connecting the divalent hydrophobic groups (b) represented by the formula (2) described above to each other via carbon-carbon bond. The unit may also be a unit formed by connecting multiple species of the divalent hydrophobic groups (b) represented by the formula (2) described above to each other in random form, in ordered form including alternating, or in block form.

For example, the hydrophobic unit (b) is represented by the following formula (5).

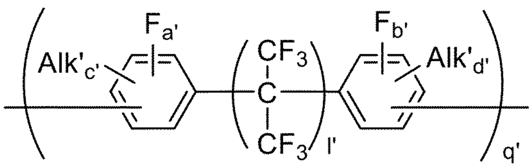

(5)

In the formula, Alk', a', b', c', d', and l' respectively have the same meaning as Alk', a', b', c', d', and l' in the formula (2) described above; and q' represents 1 to 200.

In the above formula (5), q' represents, for example, 1 to 200; and preferably represents 1 to 50.

Further preferred examples of the hydrophobic unit (b) include units formed by connecting the divalent hydrophobic groups represented by the formula (2') described above to each other via carbon-carbon bond.

The hydrophobic unit (b) is particularly preferably represented by the following formula (5').

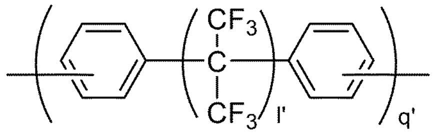

(5')

In the formula, l' has the same meaning as l' in the formula (2') described above; and q' 1 to 200.

In the above formula (5'), q represents, for example, 1 to 200; and preferably represents 1 to 50.

Preferred examples of the hydrophilic unit include units formed by connecting the divalent hydrophilic groups to each other via carbon-carbon bond; in which the divalent hydrophilic group is composed of a single aromatic ring or being composed of a plurality of aromatic rings which are connected to each other via a linking group and/or via carbon-carbon bond, in which the linking group is a divalent hydrocarbon group, a divalent silicon-containing group, a divalent nitrogen-containing group, a divalent phosphorus-containing group, a divalent oxygen-containing group, or a divalent sulfur-containing group; and in which at least one of the linking group or the aromatic ring is connected to an anion exchange group-containing group. More preferred examples of the hydrophilic unit include units formed by connecting the divalent hydrophilic groups to each other via carbon-carbon bond; in which the divalent hydrophilic group is composed of a single polycyclic compound or is composed of a plurality of polycyclic compounds which are connected to each other via a linking group and/or via carbon-carbon bond; in which the linking group is a divalent hydrocarbon group, a divalent silicon-containing group, a divalent nitrogen-containing group, a divalent phosphorus-containing group, a divalent oxygen-containing group, or a divalent sulfur-containing group; and in which at least one of the linking group or the polycyclic compound is connected to an anion exchange group via a divalent saturated hydrocarbon group with a carbon number of 2 or more. The unit may also be a unit formed by connecting multiple species of the divalent hydrophilic groups to each other in random form, in ordered form including alternating, or in block form.

Particularly preferred examples of the hydrophilic unit include units formed by connecting fluorene residues represented by the formula (3) described above to each other via carbon-carbon bond.

For example, the hydrophobic unit is represented by the following formula (6).

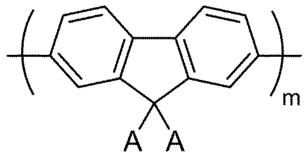

(6)

In the formula, A has the same meaning as A in the formula (3) described above; and m represents 1 to 200.

In the above formula (6), m represents, for example, 1 to 200; and preferably represents 1 to 50.

Particularly preferred examples of the hydrophilic unit include units formed by connecting the hydrophilic groups represented by the formula (3a) described above to each other via carbon-carbon bond, which are represented by the following formula (6a); units formed by connecting the hydrophilic groups represented by the formula (3b) described above to each other via carbon-carbon bond, which are represented by the following formula (6b); units formed by connecting the hydrophilic groups represented by the formula (3c) described above to each other via carbon-carbon bond, which are represented by the following formula (6c); and units formed by connecting the hydrophilic groups represented by the formula (3d) described above to each other via carbon-carbon bond, which are represented by the following formula (6d).

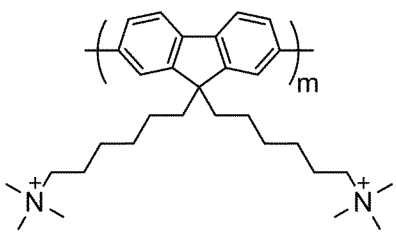

(6a)

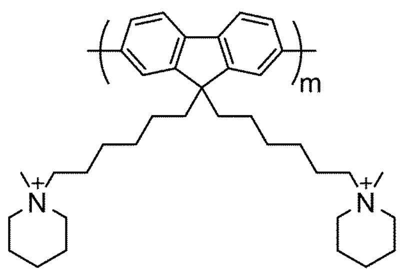

(6b)

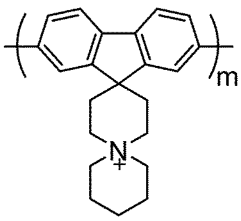

(6c)

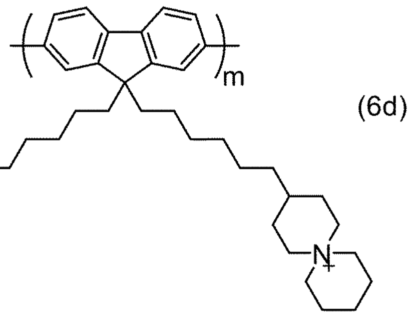

(6d)

In the formula, m represents 1 to 200.

In the above formula (6a), the above formula (6b), the above formula (6c), and the above formula (6d), m represents, for example, 1 to 200; and preferably represents 1 to 50.

In an anion exchange resin of the present invention, the hydrophobic unit (a) described above, the hydrophobic unit (b) described above, and the hydrophilic unit described above are connected via ether bond, thioether bond, or carbon-carbon bond. In particular, the hydrophobic unit (a) described above, the hydrophobic unit (b) described above, and the hydrophilic unit described above are preferably connected via carbon-carbon bond.

Preferred examples of the anion exchange resin include anion exchange resins formed by connecting the hydrophobic unit (a) represented by the formula (4) described above, the hydrophobic unit (b) represented by the formula (5) described above, and the hydrophilic unit represented by the formula (4) described above described above to each other via carbon-carbon bond, which are represented by the following formula (7).

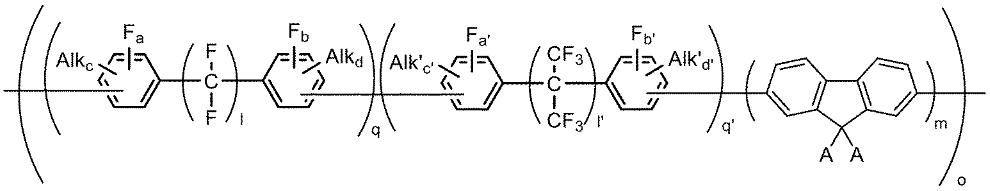

(7)

In the formula, Alk, a, b, c, d, and l respectively have the same meaning as Alk, a, b, c, d, and l in the formula (4) described above; Alk', a', b', c', d', and l' respectively have the same meaning as Alk', a', b', c', d', and l' in the formula (5) described above; A has the same meaning as A in the formula (6) described above; q, q', and m are a blending ratio or a repeating number and each represent 1 to 100; and o is a repeating number and represents 1 to 100.

Further preferred examples of the anion exchange resin include anion exchange resins formed by connecting the hydrophobic unit (a) represented by the formula (4') described above, the hydrophobic unit (b) represented by the formula (5') described above, and the hydrophilic unit represented by the formula (6) described above described above to each other via carbon-carbon bond, which are represented by the following formula (7').

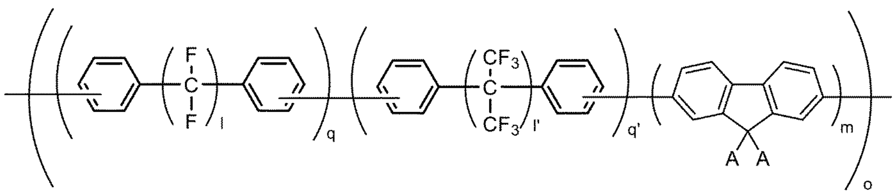

(7')

In the formula, l has the same meaning as l in the formula (4') described above; l' has the same meaning as l' in the formula (5') described above; A has the same meaning as A in the formula (6) described above; q, q', and m are a blending ratio or a repeating number and each represent 1 to 100; and o is a repeating number and represents 1 to 100.

Particularly preferred examples of the anion exchange resin include anion exchange resins formed by connecting the hydrophobic unit (a) represented by the formula (4') described above, the hydrophobic unit (b) represented by the formula (5') described above, and the hydrophilic unit represented by the formula (6a) described above described above to each other via carbon-carbon bond, which are represented by the following formula (7a); anion exchange resins formed by connecting the hydrophobic unit (a) represented by the formula (4') described above, the hydrophobic unit (b) represented by the formula (5') described above, and the hydrophilic unit represented by the formula (6b) described

above described above to each other via carbon-carbon bond, which are represented by the following formula (7b); anion exchange resins formed by connecting the hydrophobic unit (a) represented by the formula (4') described above, the hydrophobic unit (b) represented by the formula (5') described above, and the hydrophilic unit represented by the formula (6c) described above described above to each other via carbon-carbon bond, which are represented by the following formula (7c); and anion exchange resins formed by connecting the hydrophobic unit (a) represented by the formula (4') described above, the hydrophobic unit (b) represented by the formula (5') described above, and the hydrophilic unit represented by the formula (6d) described above described above to each other via carbon-carbon bond, which are represented by the following formula (7d).

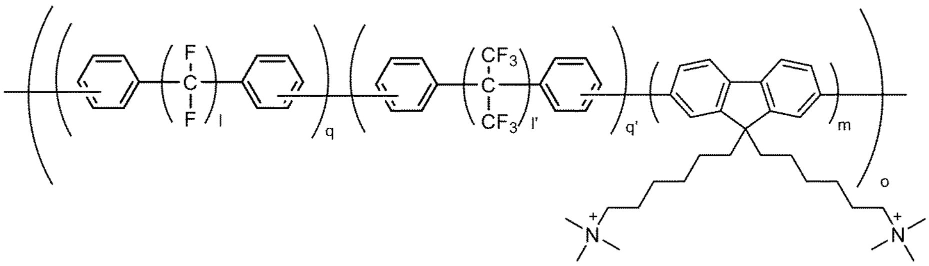

(7a)

In the formula, l has the same meaning as l in the formula (4') described above; l' has the same meaning as l' in the formula (5') described above; q, q', and m are a blending ratio or a repeating number and each represent 1 to 100; and o is a repeating number and represents 1 to 100.

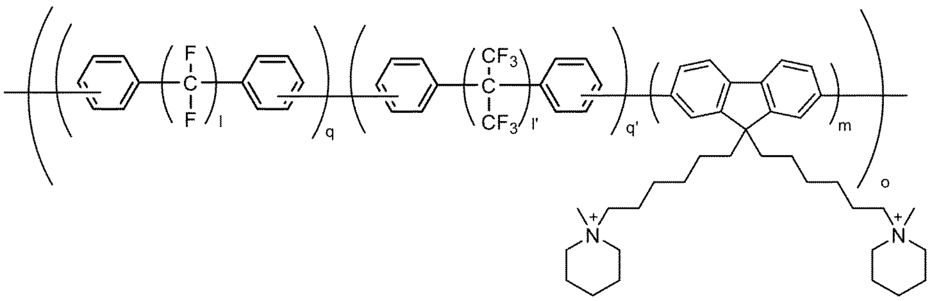

(7b)

In the formula, l has the same meaning as l in the formula (4') described above; l' has the same meaning as l' in the formula (5') described above; q, q', and m are a blending ratio or a repeating number and each represent 1 to 100; and o is a repeating number and represents 1 to 100.

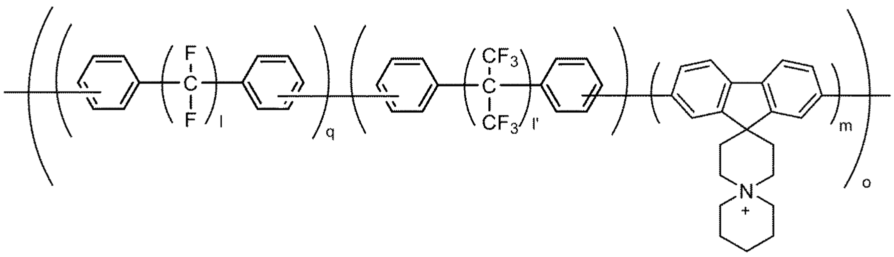

(7c)

In the formula, l has the same meaning as l in the formula (4') described above; l' has the same meaning as l' in the formula (5') described above; q, q', and m are a blending ratio or a repeating number and each represent 1 to 100; and o is a repeating number and represents 1 to 100.

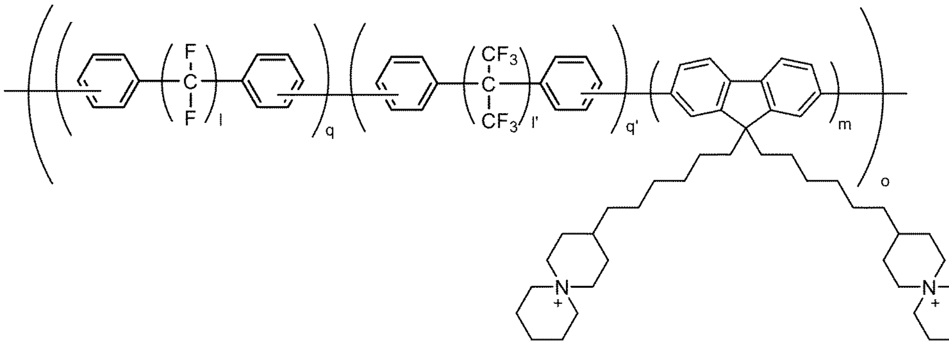

(7d)

In the formula, l has the same meaning as l in the formula (4') described above; l' has the same meaning as l' in the formula (5') described above; q, q', and m are a blending ratio or a repeating number and each represent 1 to 100; and o is a repeating number and represents 1 to 100.

The ratio of the repeating unit number q of the hydrophobic group (a) and the repeating unit number q' of the hydrophobic group (b) can be adjusted so as to obtain a desired property. The hydrophobic group (a) ratio (q/(q+q')) is, for example, 0.05 to 0.95, is preferably 0.10 to 0.75, and is more preferably 0.15 to 0.55.

The number average molecular weight of the anion exchange resin is, for example, 10 to 1000 kDa, and is preferably 30 to 500 kDa, as described above.

The method of producing an anion exchange resin is not limited and any known method can be adopted. The method by polycondensation reaction is preferably adopted.

In the case where an anion exchange resin is produced by the method, the anion exchange resin can be produced by preparing a monomer for forming a hydrophobic group (a), by preparing a monomer for forming a hydrophobic group (b), by preparing a monomer for forming a hydrophilic group having a precursor functional group for an anion exchange group, by polymerizing the monomer for forming a hydrophobic group (a), the monomer for forming a hydrophobic group (b), and the monomer for forming a hydrophilic group having a precursor functional group for an anion exchange group to form a polymer, and by ionizing the precursor functional group for an anion exchange group in the polymer. Alternatively, the anion exchange resin can be produced by preparing a monomer for forming a hydrophobic group (a), by preparing a monomer for forming a hydrophobic group (b), by preparing a monomer for forming a hydrophilic group, by polymerizing the monomer for forming a hydrophobic group (a), the monomer for forming a hydrophobic group (b), and the monomer for forming a hydrophilic group to form a polymer, and by introducing a substitution group having an anion exchange group into the polymer.

As for the polycondensation reaction, any general methods known in the art can be adopted. Preferably, coupling to form carbon-carbon bond is adopted.

Preferred examples of the monomer for forming a hydrophobic group (a) include compounds represented by the following formula (11), which corresponds to the formula (1) described above.

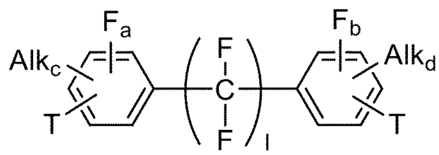

(11)

In the formula, Alk, a, b, c, d, and l respectively have the same meaning as Alk, a, b, c, d, and l in the formula (1) described above; and T are the same or different from each other and each represents a halogen atom, a pseudohalide, boronic acid group, a boronic acid derivative, or hydrogen atom.

Particularly preferred examples of the monomer for forming a hydrophobic group (a) include compounds represented by the following formula (11'), which corresponds to the formula (1') described above.

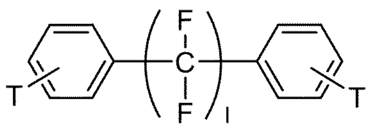

(11')

In the formula, l has the same meaning as l of the formula (1') described above; and T are the same or different from each other and each represents a halogen atom, a pseudohalide, boronic acid group, a boronic acid derivative, or

hydrogen atom.

Preferred examples of the monomer for forming a hydrophobic group (b) include compounds represented by the following formula (12), which corresponds to the formula (2) described above.

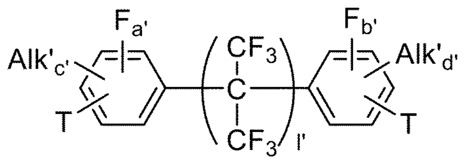

(12)

In the formula, Alk', a', b', c', d', and l' respectively have the same meaning as Alk', a', b', c', d', and l' in the formula (2) described above; and T are the same or different from each other and each represents a halogen atom, a pseudohalide, boronic acid group, a boronic acid derivative, or hydrogen atom.

Particularly preferred examples of the monomer for forming a hydrophobic group (b) include compounds represented by the following formula (12'), which corresponds to the formula (2') described above.

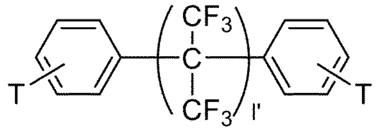

(12')

In the formula, l' has the same meaning as l' of the formula (2') described above; and T are the same or different from each other and each represents a halogen atom, a pseudohalide, boronic acid group, a boronic acid derivative, or hydrogen atom.

Preferred examples of the monomer for forming a hydrophilic group having a precursor functional group for an anion exchange group include compounds represented by the following formula (13), which corresponds to the formula (3) described above.

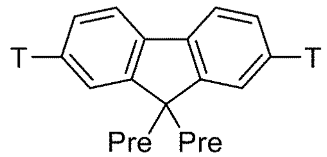

(13)

In the formula, Pre are the same or different from each other and each represents a precursor functional group for an anion exchange group, or Pre represent a cyclic structure containing a precursor functional group for an anion exchange group; and T are the same or different from each other and each represents a halogen atom, a pseudohalide, boronic acid group, a boronic acid derivative, or hydrogen atom.

In polymerizing the monomer for forming a hydrophobic group (a), the monomer for forming a hydrophobic group (b) and the monomer for forming a hydrophilic group having a precursor functional group for an anion exchange group by coupling, the blending amount of each monomer is respectively adjusted so as to achieve a desired blending ratio of the hydrophobic unit (a), the hydrophobic unit (b), and the hydrophilic unit in the resulting anion exchange resin precursor polymer.

In these methods, the monomer for forming hydrophobic group (a), the monomer for forming hydrophobic group (b), and the monomer for forming hydrophilic group having a precursor functional group for an anion exchange group can be dissolved in a solvent such as N,N-dimethylacetamide or dimethyl sulfoxide, for example; and the polymerization can be carried out with bis(cycloocta-1,5-diene)nickel(0) as a catalyst. Any other known method can be adopted.

The reaction temperature in the cross-coupling reaction is, for example, - 100 to 300°C, and is preferably -50 to 200°C. The reaction time is, for example, 1 to 48 hours, and is preferably 2 to 5 hours.

By coupling of the compound represented by formula (11) described above, the compound represented by formula (12) described above, and the compound represented by formula (13) described above, an anion exchange resin precursor polymer represented by the following formula (17).

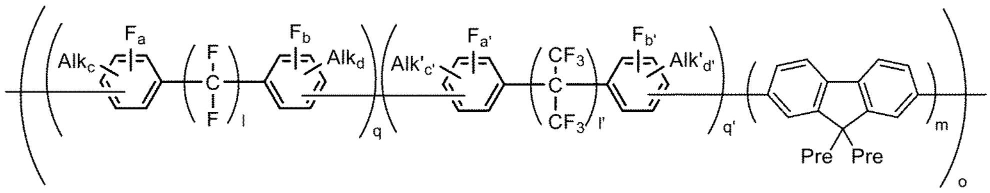

(17)

In the formula, Alk, a, b, c, d, and l respectively have the same meaning as Alk, a, b, c, d, and l in the formula (11) described above; Alk', a', b', c', d', and l' respectively have the same meaning as Alk', a', b', c', d', and l' in the formula (12) described above; Pre has the same meaning as Pre in the formula (13) described above; q, q', and m are a blending ratio or a repeating number and each represent 1 to 100; and o is a repeating number and represents 1 to 100.

Particularly preferably, by coupling of the compound represented by formula (11') described above, the compound represented by formula (12') described above, and the compound represented by formula (13) described above, an anion exchange resin precursor polymer represented by the following formula (17').

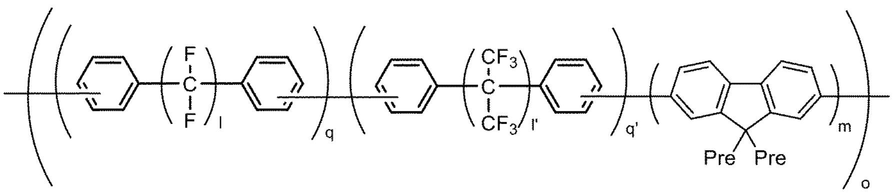

(17')

In the formula, l has the same meaning as l in the formula (11') described above; l' has the same meaning as l' in the formula (12') described above; Pre has the same meaning as A in the formula (13) described above; q, q', and m are a blending ratio or a repeating number and each represent 1 to 100; and o is a repeating number and represents 1 to 100.

In this method, the precursor functional group for an anion exchange group is then ionized. The method of ionization is not limited and any known method can be adopted.

For example, the anion exchange resin precursor polymer can be dissolved in a solvent such as N,N-dimethylacetamide or dimethyl sulfoxide and can be ionized using methyl iodide or the like as an alkylating agent, and any other known method can be adopted.

The reaction temperature in the ionization reaction is, for example, 0 to 100°C, and is preferably 20 to 80°C. The reaction time is, for example, 24 to 72 hours, and is preferably 48 to 72 hours.

By ionizing the anion exchange resin precursor polymer represented by the formula (17) described above, the anion exchange resin represented by the formula (7) described above is obtained. Particularly preferably, by ionizing the anion exchange resin precursor polymer represented by the formula (17') described above, the anion exchange resin represented by the formula (7') described above is obtained.

The ion exchange group capacity of the anion exchange resin is, for example, 0.1 to 4.0 meq./g, and is preferably 0.6 to 3.0 meq./g.

The ion exchange group capacity can be calculated by the following equation (24).

[ion exchange group capacity (meq./g)] = the amount of the anion exchange group introduced per hydrophilic unit × the repeating unit of the hydrophilic unit × 1000 / (the molecular weight of the hydrophobic unit × the repeating unit number of the hydrophobic unit + the molecular weight of the hydrophilic unit × the repeating unit number of the hydrophilic unit + the molecular weight of the ion exchange group × the repeating unit number of the hydrophilic unit) (24)

The amount of the ion exchange group introduced is defined as the number of the ion exchange group per unit of the hydrophilic group. The amount of the anion exchange group introduced is the mole number (mol) of the anion exchange group introduced in the main chain or the side chain of the hydrophilic group.

The anion exchange resin has: a divalent hydrophobic group (a) comprising a bisphenol residue represented

by the following formula (1); a divalent hydrophobic group (b) comprising a bisphenol residue represented by the following formula (2); and a divalent hydrophilic group, being composed of a single aromatic ring or being composed of a plurality of aromatic rings which are connected to each other via a linking group and/or via carbon-carbon bond, in which the linking group is a divalent hydrocarbon group, a divalent silicon-containing group, a divalent nitrogen-containing group, a divalent phosphorus-containing group, a divalent oxygen-containing group, or a divalent sulfur-containing group, and in which at least one of the linking group or the aromatic ring is connected to an anion exchange group via a divalent saturated hydrocarbon group with a carbon number of 2 or more; in which the anion exchange resin has: a hydrophobic unit (a), being composed of the single hydrophobic group (a), or being composed of a plurality of the hydrophobic groups (a) repeated via ether bond, thioether bond, or carbon-carbon bond; a hydrophobic unit (b), being composed of the single hydrophobic group (b), or being composed of a plurality of the hydrophobic groups (b) repeated via ether bond, thioether bond, or carbon-carbon bond; and a hydrophilic unit, being composed of the single hydrophilic group, or being composed of a plurality of the hydrophilic groups repeated via ether bond, thioether bond, or carbon-carbon bond; and in which the hydrophobic unit (a), the hydrophobic unit (b), and the hydrophilic unit are connected via ether bond, thioether bond, or carbon-carbon bond. The anion exchange resin has excellent chemical property (durability, especially alkali resistance), electrical property (anion conductivity), and mechanical property (thin film flexibility).

In particular, in the case where the anion exchange resin has a hydrophilic unit being composed of hydrophilic groups repeated via direct bond, the hydrophilic unit does not have ether bond, and therefore the anion exchange resin has improved durability such as alkali resistance. More specifically, if the hydrophilic unit has ether bond, the decomposition by hydroxide ion ($OH^-$) as described below may occur, and alkali resistance may not be sufficient.

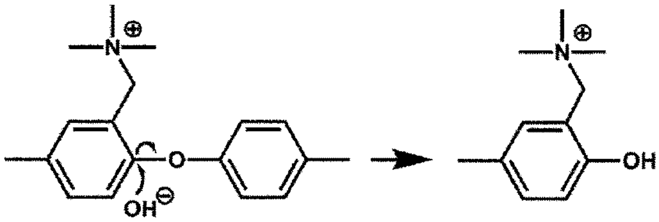

In contrast, since the hydrophilic unit of the anion exchange resin having a hydrophilic unit being composed of the hydrophilic groups repeated via direct bond does not have ether bond, the decomposition by the mechanism described above does not occur, and therefore the anion exchange resin has an improved durability such as alkali resistance.

The present invention includes electrolyte layers (electrolyte membranes) obtained by using the anion exchange resin. An electrolyte membrane of the present invention is applicable to various electrochemical applications such as fuel cells, water electrolysis hydrogen generators, and electrochemical hydrogen pumps, but is particularly suitable for use in water electrolysis hydrogen generators. In fuel cells, electrochemical hydrogen pumps, and water electrolysis hydrogen generators, the electrolyte membrane is used in a structural state in which catalyst layers, electrode substrates, and separators are sequentially laminated on both sides. Among these, the structure material with catalyst layers and gas diffusion substrates sequentially laminated on both sides of the electrolyte membrane (with layer composition of gas diffusion substrate/catalyst layer/electrolyte membrane/catalyst layer/gas diffusion substrate) is called membrane electrode assembly (MEA). An electrolyte membrane of the present invention is suitably used as an electrolyte membrane that constitutes an MEA.

The anion exchange resin described above can be used as an electrolyte membrane (i.e., the electrolyte membrane contains the anion exchange resin described above).

The electrolyte membrane can be reinforced, for example, with a known reinforcing material such as a porous substrate, and can also be subjected to various treatments such as biaxial stretching treatments to control the molecular orientation and heat treatments to control crystallinity and residual stress. Known fillers can be added to the electrolyte membrane 4 to increase the mechanical strength, and the electrolyte membrane 4 can be composited with a reinforcing agent such as a glass nonwoven fabric by pressing.

In addition, various additives normally used in electrolyte membranes, such as compatibilizers to improve the compatibility, antioxidants to prevent the resin degradation, and antistatic agents and lubricants to improve the handling during the film forming and processing, may be included as needed to the extent that they do not affect processing and performance as an electrolyte membrane 4.

The thickness of the electrolyte membrane is not particularly limited and is suitably set according to the purpose and application.

The thickness of the electrolyte membrane is, for example, 1.2 to 350 μm, and is preferably 5 to 200 μm.

Although the embodiments of the present invention have been described hereinabove, embodiments of the present invention are not limited to the embodiments, but may be modified as appropriate to the extent which does not

change the scope of the invention.

EXAMPLE

The present invention is described based on the Examples and the Comparative Examples, but the present invention is not limited to the following Examples.

[Example 1: Synthesis of anion exchange resin $QBP_{17}A$ (IEC = 2.1 meq./g)]

<Synthesis of monomer 1>

To a 100 mL round-shaped three-necked flask equipped with a nitrogen inlet and a condenser were added 1,6-diiodoperfluorohexane (5.54 g, 10.0 mmol), 3-chloroiodobenzene (11.9 g, 50 mmol), and dimethyl sulfoxide (60 mL). After the mixture was stirred to form a homogeneous solution, copper powder (9.53 g, 150 mmol) was added, and the reaction was carried out at 120°C for 48 hours. The reaction was quenched by adding the reaction solution dropwise to 0.1 M aqueous nitric acid solution. The mixture was filtered to collect the precipitate. The precipitate was washed with methanol, and then the filtrate was collected. After the similar procedure was repeated, a white solid was precipitated by adding pure water to the combined filtrate. The white solid was filtered and collected, was washed with a mixed solution of pure water and methanol (pure water/methanol = 1/1), and was then dried under vacuum overnight (60°C) to obtain a monomer 1 (white solid) represented by the following formula in a yield of 84%.

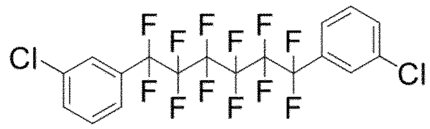

<Synthesis of monomer 2>

To a 300 mL round-shaped three-necked flask equipped with a nitrogen inlet and a condenser were added bisphenol AF (18.0 g, 53.8 mmol) and dichlorotriphenyl phosphorane (36.0 g, 107 mmol), and the reaction was carried out at 350°C for 4 hours. Dichloromethane and hexane were added to the reaction mixture. After that, the mixture was purified by column chromatography on silica gel (eluent: hexane), and was then dried under vacuum overnight (60°C) to obtain a monomer 2 (white solid) represented by the following formula in a yield of 60%.

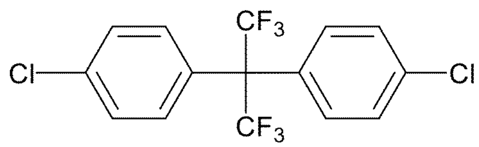

<Synthesis of monomer 3>

To a 500 mL round-shaped three-necked flask were added fluorene (83.1 g, 0.50 mol), N-chlorosuccinimide (167 g, 1.25 mol), and acetonitrile (166 mL). After the mixture was stirred to form a homogeneous solution, 12 M hydrochloric acid (16.6 mL) was added, and the reaction was carried out at room temperature for 24 hours. The reaction mixture was filtered to collect the precipitate. The precipitate was washed with methanol and with pure water, and was then dried under vacuum overnight (60°C) to obtain a monomer 3 (white solid) represented by the following formula in a yield of 65%.

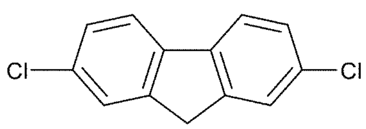

<Synthesis of monomer 4>

To a 300 mL round-shaped three-necked flask were added the monomer 3 (8.23 g, 35.0 mmol) and 1,6-dibromohexane (53 mL). After the mixture was stirred to form a homogeneous solution, a mixed solution of tetrabutylammonium (2.26 g, 7.00 mmol), potassium hydroxide (35.0 g), and pure water (35 mL) were added, and the reaction was carried out at 80°C for 1 hour. The reaction was quenched by adding pure water to the reaction solution. The target compound was extracted with dichloromethane from the water layer. The combined organic layer was washed with pure water and with sodium chloride solution, and then water, dichloromethane, and 1,6-dibromohexane were distilled off. The crude product was purified by column chromatography on silica gel (eluent: dichlorometane/hexane = 1/4), and was then dried under vacuum overnight (60°C) to obtain a monomer 4 (pale yellow solid) represented by the following formula in a yield of 75%.

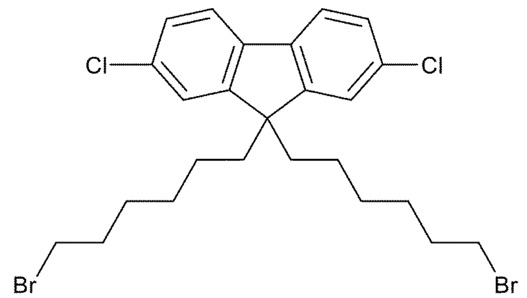

<Synthesis of monomer 5>

To a 300 mL round-shaped three-necked flask were added the monomer 4 (13.2 g, 23.4 mol) and tetrahydrofuran (117 mL). After the mixture was stirred to form a homogeneous solution, 40 wt% dimethylamine aqueous solution (58.6 mL) was added, and the reaction was carried out at room temperature for 24 hours. The reaction was quenched by adding a saturated solution of sodium hydrogen carbonate in water to the reaction solution. Tetrahydrofuran was removed from the solution and then the target ingredient was extracted by adding hexane. The organic layer was washed with sodium chloride solution, and then water and hexane were distilled off. The resulting product was dried under vacuum overnight at 40°C to obtain a monomer 5 (pale yellow solid) represented by the following formula in a yield of 75%.

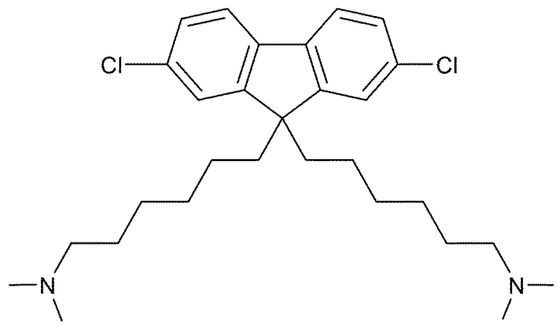

(Polymerization reaction)

To a 100 mL round-shaped three-necked flask equipped with a nitrogen inlet and a condenser were added the monomer 1 (208 mg, 377 μmol), the monomer 2 (701 mg, 1.88 μmol) , the monomer 5 (785 mg, 1.59 μmol), 2,2'-bipyridine (3.07 g, 19.7 mmol), and N,N-dimethylacetamide (13 mL). After the mixture was stirred to form a homogeneous solution, bis(1,5-cyclooctadiene)nickel(0) (3.00 g, 10.9 mmol) was added, and the reaction was carried out at 80°C for 3 hours. The reaction was quenched by adding the reaction mixture dropwise to a mixed solution of methanol and 12 M hydrochloric acid (methanol / 12 M hydrochloric acid = 1/1). The reaction mixture was filtered to collect the precipitate. The precipitate was washed with 12 M hydrochloric acid, with 0.2 M potassium carbonate, and with pure water, and was then dried under vacuum overnight (60°C) to obtain an anion exchange resin precursor polymer $BP_{17}A$ represented by the following formula in a yield of 86%.

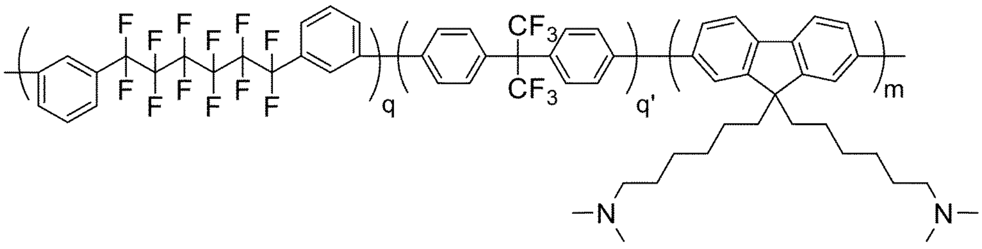

(Quaternization reaction, membrane formation, and ion exchange)

To a 50 mL round-shaped three-necked flask were added the anion exchange resin precursor polymer $BP_{17}A$ (1.24 g) and N,N-dimethylacetamide (13 mL). After the mixture was stirred to form a homogeneous solution, dimethyl sulfate (6.44 mL, 67.9 mmol) was added, and the reaction was carried out at room temperature for 48 hours. The reaction solution was added dropwise to pure water. The reaction mixture was filtered to collect the precipitate. The precipitate was washed with pure water, and was then dried under vacuum overnight (60°C) to obtain an anion exchange resin $QBP_{17}A$.

To a 20 mL of round-bottomed three-necked flask were added the anion exchange resin $QBP_{17}A$ and N,N-dimethylacetamide. After the mixture was stirred to form a homogeneous solution, the solution was filtered. The filtrate was poured into a glass plate wound with silicone rubber and was dried on a hot plate adjusted so as to be oriented horizontally at 50°C to obtain a light brown transparent film. Further, the counter-ion of the ion exchange group (quaternary ammonium group) in the membrane was converted to hydroxide ion by immersing the membrane in 1 M aqueous potassium hydroxide (80°C) for 48 hours and by washing the membrane with degassed pure water. By the reaction, a membrane of the anion exchange resin $QBP_{17}A$ (IEC = 2.1 meq./g, hydroxide ion type) represented by the following formula was obtained.

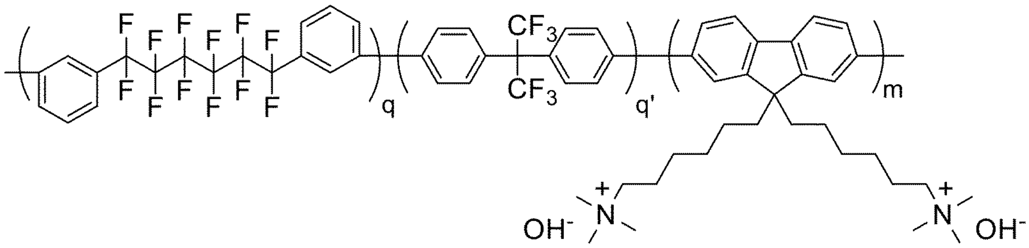

[Example 2: Synthesis of anion exchange resin $QBP_{17}A$-2.5 (IEC = 2.5 meq./g)]

A membrane of an anion exchange resin $QBP_{17}A$-2.5 (IEC = 2.5 meq./g, hydroxide ion type) was obtained by a similar method described above by using the monomer 1, the monomer 2, and the monomer 5 which are described above and by modifying a blending amount of the reagents if needed (q:q':m = 0.20:1.00:1.52).

[Example 3: Synthesis of anion exchange resin $QBP_{50}A$ (IEC = 2.0 meq./g)]

A membrane of an anion exchange resin $QBP_{50}A$ (IEC = 2.0 meq./g, hydroxide ion type) was obtained by a similar method described above by using the monomer 1, the monomer 2, and the monomer 5, described above, and by modifying a blending amount of the reagents if needed (q:q':m = 1.00:1.00:1.61).

[Example 4: Synthesis of anion exchange resin $QBP_{60}A$ (IEC = 2.0 meq./g)]

A membrane of an anion exchange resin $QBP_{60}A$ (IEC = 2.0 meq./g, hydroxide ion type) was obtained by a similar method described above by using the monomer 1, the monomer 2, and the monomer 5, described above, and by modifying a blending amount of the reagents if needed (q:q':m = 0.75:0.50:1.04).

[Example 5: Synthesis of anion exchange resin $QBP_{83}A$ (IEC = 2.1 meq./g)]

A membrane of an anion exchange resin $QBP_{83}A$ (IEC = 2.1 meq./g, hydroxide ion type) was obtained by a similar method described above by using the monomer 1, the monomer 2, and the monomer 5, described above, and by modifying a blending amount of the reagents if needed (q:q':m = 1.00:0.20:1.09).

[Comparative Example 1: Synthesis of anion exchange resin BAF-QAF (IEC = 2.0 meq./g)]

A membrane of an anion exchange resin BAF-QAF (IEC = 2.0 meq./g, hydroxide ion type) was obtained by a similar method described above by using the monomer 2 and the monomer 5, described above, without using the monomer 1 described above, and by modifying a blending amount of the reagents if needed (q':m = 1.00:0.58).

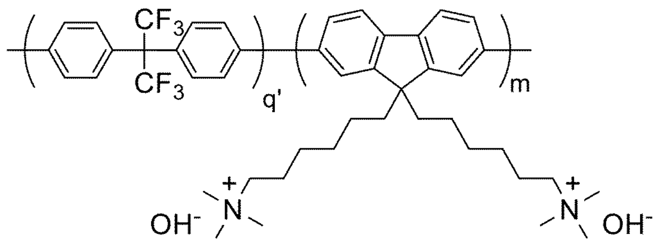

[Comparative Example 2: Synthesis of anion exchange resin QPAF-4 (IEC = 2.0 meq./g)]

A membrane of an anion exchange resin QPAF-4 (IEC = 2.0 meq./g, hydroxide ion type) was obtained by a similar method described above by using the monomer 1 and the monomer 5, described above, without using the monomer 2 described above, and by modifying a blending amount of the reagents if needed (q:m = 1.00:0.87).

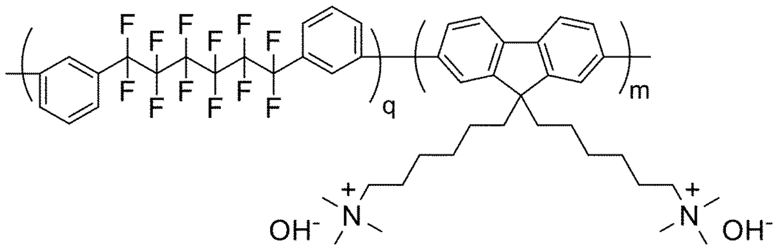

<Ion exchange capacity>

The ion exchange capacity was measured for the anion exchange resin membranes obtained in the Examples and the Comparative examples. Specifically, the ion exchange capacity: IEC (meq./g) was calculated from the substance mass of the counter ion in the membrane: a (mmol) and the mass of the dry membrane: $W_{dry}$ (hydroxide ion type) (g) by the following equation.

$$IEC = a/W_{dry} \text{ (hydroxide ion type)}$$

As for a, the substance amount of chloride ion released in the aqueous solution by the ion exchange was measured with Mohr's method when the chloride ion type membrane was stirred in an aqueous sodium nitrate solution. $W_{dry}$ (hydroxide ion type) was calculated by $W_{dry}$ (chloride ion type) and a, in which $W_{dry}$ (chloride ion type) was calculated as the difference of the mass by drying the chloride ion type membrane under vacuum (60°C) for 12 hours, and by quickly transferring the membrane into the sampling bottle whose mass had been previously measured, and by weighing the sampling bottle sealed with a cap.

<Tensile test>

Tensile test was performed for the anion exchange resin membranes obtained in the Examples and Comparative examples. Specifically, the anion exchange resin membrane (chloride ion type) obtained in the Examples and Comparative Examples was cut into a piece with a dumbbell shape (DIN-53504 - S3) of 12 mm × 2 mm (total sample area: 35 mm × 6 mm) as a measurement sample. Tensile test was performed in a chamber controlled at a constant temperature and a constant humidity, using Shimadzu universal testing instrument Autograph AGS-J500N equipped with Toshin Kogyo temperature control unit Bethel-3. In the measurement, the sample was held at 80°C and 60% RH for 3 hours and was then pulled at a rate of 1.0 mm/min. The elongation at break point was calculated from the stress-strain curve obtained.

The results are shown in FIG. 1. In Comparative Example 1, Example 1, Example 3, Example 4, and Example 5 where the IEC were similar, Example 1, Example 3, Example 4, and Example 5 where the hydrophobic group (a) is contained show a larger elongation at break than that of Comparative Example 1 where the hydrophobic group (a) is not contained.

<Hydroxide ion conductivity>

The hydroxide ion conductivity was measured on the anion exchange resin membranes obtained in the Examples and the Comparative Examples. Specifically, the anion exchange resin membrane obtained in the Examples and the Comparative Examples was cut into a piece with a width of 1 cm and a length of 3 cm as a measurement sample. The sample was immersed in 1 M aqueous potassium hydroxide solution (80°C) for 48 hours to convert it to hydroxide ion type. The measurement of the hydroxide ion conductivity was carried out by four-terminal method using alternating current (300 mV, 10-100000 Hz) in water at 30°C. Solartolon 1255B/1287 was used as an apparatus for the measurement, and a gold wire having a diameter of 1 mm was used as a probe. The hydroxide ion conductivity $\sigma$ (S/cm) was calculated from the distance between probes L (1 cm), the impedance Z ($\Omega$), and the cross-sectional area of the membrane A ($cm^2$) by the following equation.

$$\sigma = (L/Z) \times 1/A$$

The results are shown in FIG. 2. In Comparative Example 1, Example 1, Example 3, Example 4, and Example 5 where the IEC were similar, Example 1, Example 3, Example 4, and Example 5 where the hydrophobic group (a) and the hydrophobic group (b) are contained show a high hydroxide ion conductivity comparable to that of Comparative Example 1 where the hydrophobic group (a) is not contained. Further, the hydroxide ion conductivity tends to be decreased due to the increase of the hydrophobic group (a) ratio (q/(q+q')).

<Moisture content>

The moisture content was measured for the anion exchange resin membranes obtained in the Examples and the Comparative examples. Specifically, the anion exchange resin membrane obtained in the Examples and the Comparative Examples was cut into a piece with a width of 1 cm and a length of 3 cm as a measurement sample. The sample was immersed in 1 M aqueous potassium hydroxide solution (80°C) for 48 hours to convert it to hydroxide ion type. The moisture content (%) was calculated from the mass of a moisture content film: $W_{wet}$ (g) and the mass of a dry film: $W_{dry}$ (g) by the following equation.

$$\text{Moisture content (\%)} = (W_{wet} - W_{dry})/W_{dry} \times 100$$

$W_{wet}$ was calculated as the difference of the mass by washing the sample pulled out from 1 M aqueous potassium hydroxide solution with degassed pure water, by immersing the sample in pure water at room temperature for 24 hours or longer, by wiping off water droplets on the surface of the sample with a tissue, by quickly transferring the membrane into the sampling bottle whose mass had been previously measured, and by weighing the sampling bottle sealed with a cap. $W_{dry}$ was calculated as the difference of the mass by drying a moisture-containing sample under vacuum (60°C) for 12 hours, by quickly transferring the membrane into the sampling bottle whose mass had been previously measured, and by weighing the sampling bottle sealed with a cap.

The results are shown in FIG. 3. In Comparative Example 1, Example 1, Example 3, Example 4, Example 5, and Comparative Example 2 where the IEC were similar, the moisture content tends to be increased due to the increase of the hydrophobic group (a) ratio (q/(q+q')).

<Durability test>

Durability test was performed on the anion exchange resin membranes obtained in the Examples and the Comparative examples. Specifically, the change over time in the hydroxide ion conductivity of the membrane of the anion exchange resin (hydroxide ion type) were measured when the membrane was immersed in 8 M aqueous potassium hydroxide solution (80°C). The method of measuring the hydroxide ion conductivity is the same as described above, except that the measurement by four-terminal method using alternating current was preform in pure water at 40°C.

The results are shown in FIG. 4. In Comparative Example 1, Example 1, Example 3, Example 4, Example 5, and Comparative Example 2 where the IEC were similar, Example 1, Example 3, Example 4, and Example 5 where both

the hydrophobic group (a) and the hydrophobic group (b) are contained show a higher thermal alkali stability than that of Comparative Example 1 where only the hydrophobic group (b) is contained and that of Comparative Example 2 where only the hydrophobic group (a) is contained.

In Comparative Example 1, Example 1, Example 3, Example 4, Example 5, and Comparative Example 2 where the IEC were similar, Example 1 where the hydrophobic group (a) ratio (q/(q+q')) is 0.17 shows both a high hydroxide ion conductivity and a large elongation at break point. Further, Example 2 where the hydrophobic group (a) ratio (q/(q+q')) of Example 1 is fixed to 0.1 and the IEC is increased shows a larger elongation at break point than that of Example 1 with maintaining a high hydroxide ion conductivity comparable to that of Example 1. Furthermore, Example 2 shows a higher thermal alkali stability than that of Example 1.

## Claims

**1.** An anion exchange resin, comprising:

a divalent hydrophobic group (a) comprising a bisphenol residue represented by the following formula (1);
a divalent hydrophobic group (b) comprising a bisphenol residue represented by the following formula (2); and
a divalent hydrophilic group, being composed of a single aromatic ring or being composed of a plurality of aromatic rings which are connected to each other via a linking group and/or via carbon-carbon bond; wherein the linking group is a divalent hydrocarbon group, a divalent silicon-containing group, a divalent nitrogen-containing group, a divalent phosphorus-containing group, a divalent oxygen-containing group, or a divalent sulfur-containing group; and at least one of the linking group or the aromatic ring is connected to an anion exchange group via a divalent saturated hydrocarbon group with a carbon number of 2 or more;
wherein the anion exchange resin comprises a hydrophobic unit (a), being composed of the single hydrophobic group (a), or being composed of a plurality of the hydrophobic groups (a) repeated via ether bond, thioether bond, or carbon-carbon bond;
wherein the anion exchange resin comprises a hydrophobic unit (b), being composed of the single hydrophobic group (b), or being composed of a plurality of the hydrophobic groups (b) repeated via ether bond, thioether bond, or carbon-carbon bond;
wherein the anion exchange resin comprises a hydrophilic unit, being composed of the single hydrophilic group, or being composed of a plurality of the hydrophilic groups repeated via ether bond, thioether bond, or carbon-carbon bond; and
wherein the hydrophobic unit (a), the hydrophobic unit (b), and the hydrophilic unit are connected via ether bond, thioether bond, or carbon-carbon bond:

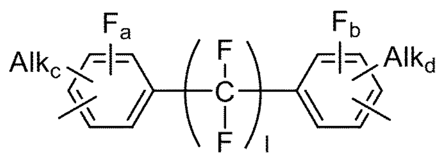 (1)

wherein, in the formula, Alk are the same or different from each other and each represents an alkyl group or an aryl group; a, b, c, and d are the same or different from each other and each represents an integer of 0 to 4; and l represents an integer of 1 or more; and

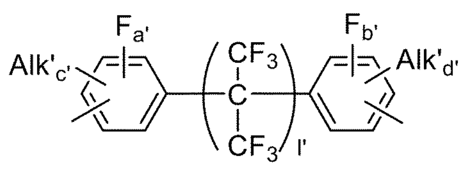 (2)

wherein, in the formula, Alk' are the same or different from each other and each represents an alkyl group or an aryl group; a', b ', c', and d' are the same or different from each other and each represents an integer of 0 to 4; and l' represents an integer of 1 or more.

**2.** The anion exchange resin according to claim 1,

wherein the hydrophobic group (a) comprises a bisphenol residue represented by the following formula (1'):

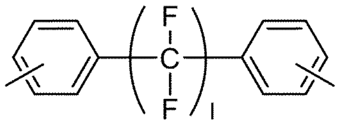

(1')

wherein, in the formula, l represents an integer of 1 or more.

**3.** The anion exchange resin according to claim 1,

wherein the hydrophobic group (b) comprises a bisphenol residue represented by the following formula (2'):

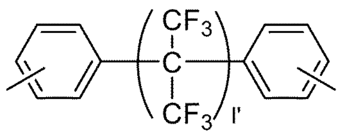

(2')

wherein, in the formula, l' represents an integer of 1 or more.

**4.** The anion exchange resin according to any one of claims 1 to 3, wherein the hydrophilic group is a divalent hydrophilic group, being composed of a single polycyclic compound or being composed of a plurality of polycyclic compounds which are connected to each other via a linking group and/or via carbon-carbon bond; wherein the linking group is a divalent hydrocarbon group, a divalent silicon-containing group, a divalent nitrogen-containing group, a divalent phosphorus-containing group, a divalent oxygen-containing group, or a divalent sulfur-containing group; and at least one of the linking group or the polycyclic compound is connected to an anion exchange group via a divalent saturated hydrocarbon group with a carbon number of 2 or more.

**5.** The anion exchange resin according to claim 4,

wherein the divalent hydrophilic group is a fluorene residue represented by the following formula (3):

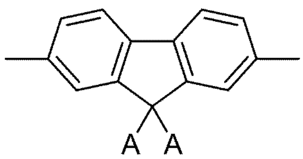

(3)

wherein, in the formula, A are the same or different from each other and each represents an anion exchange group-containing group, or A represent a cyclic structure containing an anion exchange group.

**6.** An electrolyte membrane, comprising the anion exchange resin according to any one of claims 1 to 5.

FIG. 1

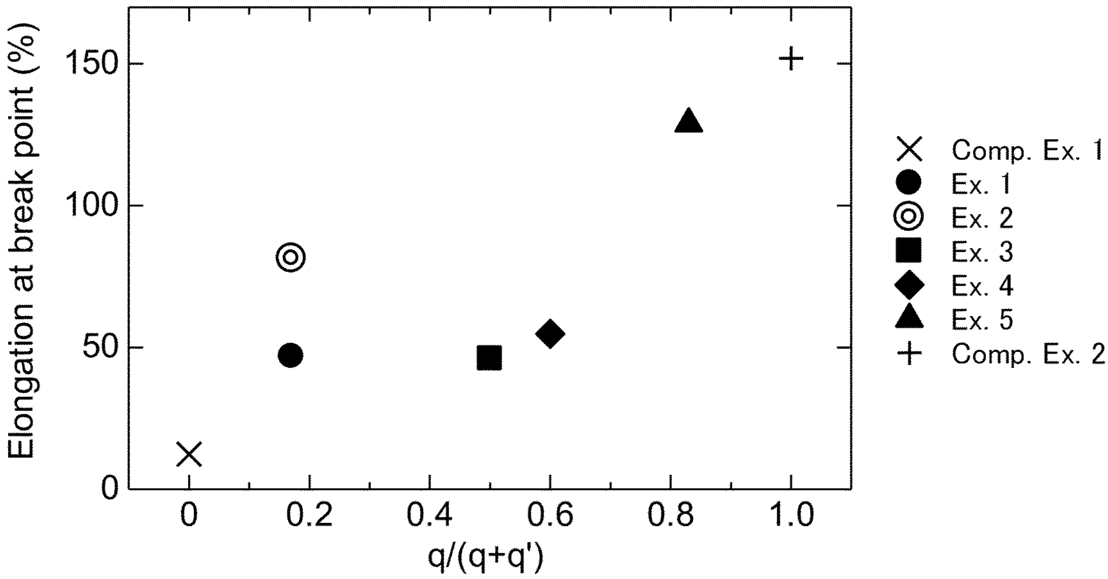


Fig. 1

FIG. 2

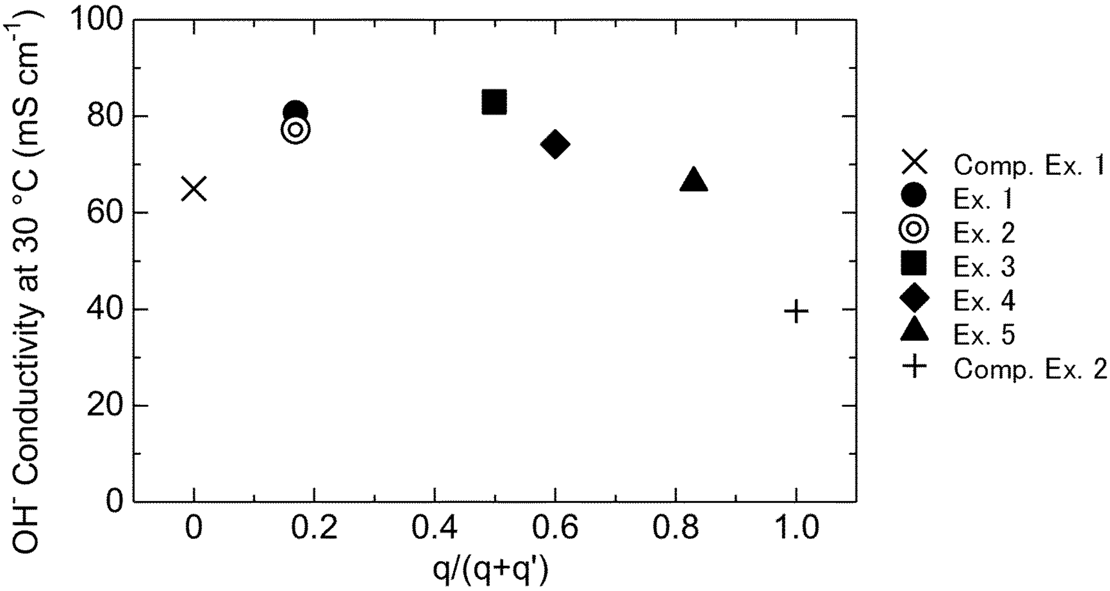


Fig. 2

FIG. 3

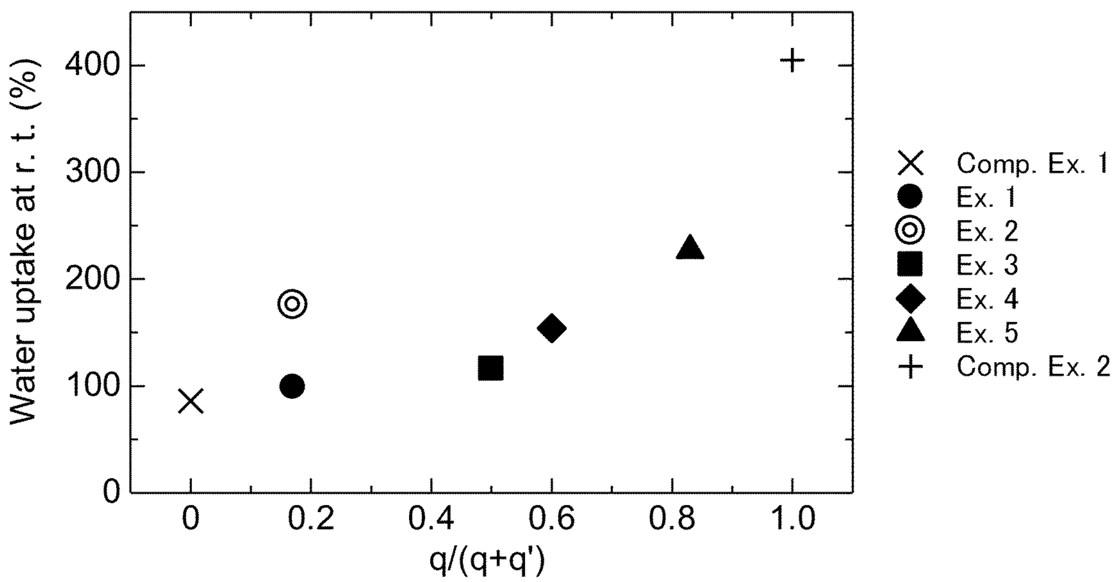


Fig. 3

FIG. 4

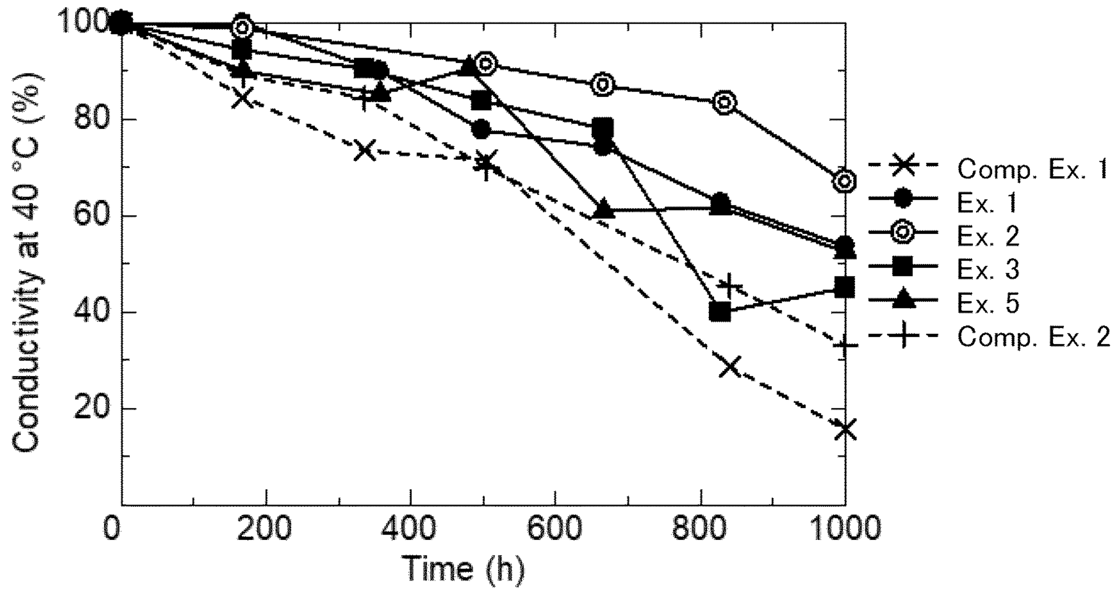


Fig. 4

**INTERNATIONAL SEARCH REPORT**

International application No. PCT/JP2021/017255

A. CLASSIFICATION OF SUBJECT MATTER
C08G 61/02(2006.01)i; H01M 4/86(2006.01)i; H01M 8/02(2016.01)i
FI: C08G61/02; H01M4/86 B; H01M8/02

According to International Patent Classification (IPC) or to both national classification and IPC

B. FIELDS SEARCHED

Minimum documentation searched (classification system followed by classification symbols)
C08G61/02; H01M4/86; H01M8/02

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)
CAplus/REGISTRY (STN)

C. DOCUMENTS CONSIDERED TO BE RELEVANT

| Category* | Citation of document, with indication, where appropriate, of the relevant passages | Relevant to claim No. |
|---|---|---|
| A | JP 2017-61583 A (UNIV YAMANASHI) 30 March 2017 (2017-03-30) | 1-6 |
| A | JP 2016-196664 A (TAKAHATA PREC JAPAN CO LTD) 24 November 2016 (2016-11-24) | 1-6 |
| A | JP 2019-23258 A (UNIV YAMANASHI) 14 February 2019 (2019-02-14) | 1-6 |
| A | JP 2009-238468 A (HONDA MOTOR CO LTD) 15 October 2009 (2009-10-15) | 1-6 |

☐ Further documents are listed in the continuation of Box C.    ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 25 May 2021 (25.05.2021) | 08 June 2021 (08.06.2021) |
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**
Information on patent family members

International application No.
PCT/JP2021/017255

| Patent Documents referred in the Report | Publication Date | Patent Family | Publication Date |
|---|---|---|---|
| JP 2017-61583 A | 30 Mar. 2017 | US 2018/0265626 A1 | |
| JP 2016-196664 A | 24 Nov. 2016 | (Family: none) | |
| JP 2019-23258 A | 14 Feb. 2019 | US 2019/0027767 A1 | |
| JP 2009-238468 A | 15 Oct. 2009 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2020117568 A